# FASCICULE DE BREVET EUROPEEN

(11) **EP 3 657 001 B1**
(45) Date de publication et mention de la délivrance du brevet: **29.12.2021**
(21) Numéro de dépôt: 19203754.7
(22) Date de dépôt: 17.10.2019
(51) Int. Cl.: F02K 3/115, F02C 7/047, F02C 7/14, F02C 7/16, F02C 6/08

(54) **TURBOMACHINE EQUIPÉE D'UN SYSTÈME DE DÉGIVRAGE DE L'ENTRÉE D'AIR**
TURBOTRIEBWERK, DAS MIT EINEM ENTEISUNGSSYSTEM DES LUFTEINLASSES AUSGESTATTET IST
TURBINE ENGINE PROVIDED WITH A SYSTEM FOR DE-ICING OF THE AIR INTAKE

(30) Priorité: 22.11.2018 FR 1871713
(43) Date de publication de la demande: 27.05.2020
(73) Titulaire: AIRBUS OPERATIONS (S.A.S.), 31060 Toulouse (FR)
(72) Inventeur: ZEBIAN, Maxime, 31060 TOULOUSE Cedex 9 (FR)
(74) Mandataire: Gicquel, Olivier Yves Gérard

(56) Documents cités:
- WO-A1-2014/155009
- FR-A1- 3 054 856
- US-A- 3 981 466
- US-A1- 2015 291 284

## Description

La présente invention concerne une turbomachine équipée d'un système de dégivrage pour assurer le dégivrage de l'entrée d'air.

De manière connue, une turbomachine comprend une nacelle ayant une entrée d'air pour canaliser l'air ingéré dans la nacelle vers la soufflante. L'entrée d'air comprend des portions en contact avec l'air extérieur et par conséquent potentiellement sujettes au givrage. Il est connu, afin d'éliminer toute accrétion de glace, de chauffer ces portions par un système de dégivrage qui est soit de type électrique (fonctionnement de type résistif/inductif) soit de type pneumatique (fonctionnement par prélèvement d'air chaud sur le moteur).

Dans un objectif de réduction de la masse de l'entrée d'air, les portions au contact de l'air sont réalisées en matériaux composites ou en métaux légers comme l'aluminium. Il est connu que les matériaux composites ou l'aluminium ont une résistance à la chaleur limitée (de l'ordre de 150°C pour les matériaux composites, 300°C pour l'aluminium) et de ce fait, seuls les systèmes de dégivrage de type électriques sont utilisés pour des entrées d'air en matériaux composite/aluminium. En effet, les systèmes de dégivrage de type pneumatiques peuvent générer, durant des modes de fonctionnement spécifiques du moteur, des températures élevées (supérieures à 150°C) pouvant endommager les portions réalisées en matériaux composites ou en aluminium.

Les systèmes de dégivrage électriques fonctionnent avec un signal électrique de haute puissance fourni par des câbles électriques transitant via l'aile entre le cœur haute puissance de l'aéronef situé dans le fuselage de l'aéronef et l'entrée d'air. Au contraire, en utilisant l'air chaud directement prélevé sur le moteur, les systèmes de dégivrages pneumatiques présentent l'avantage d'être moins complexes à installer et moins pénalisants en termes de masse.

Il existe un besoin de trouver un système de dégivrage pneumatique compatible avec une entrée d'air réalisée en partie par des matériaux composites et ou de l'aluminium.

Le document brevet US2015/291284 décrit un système de dégivrage pneumatique dans lequel le flux d'air chaud prélevé sur le moteur est refroidi, en utilisant l'air extérieur à la nacelle, avant de l'envoyer vers l'entrée d'air à des fins de dégivrage.

L'invention vise à trouver une solution alternative pour réduire la température de l'air chaud prélevé sur le moteur, et concerne une turbomachine à double flux telle que revendiquée à la revendication 1.

Les caractéristiques de l'invention mentionnées ci-dessus, ainsi que d'autres, apparaîtront plus clairement à la lecture de la description suivante d'un exemple de réalisation, ladite description étant faite en relation avec les figures jointes, parmi lesquels :
- la figure 1 est une vue schématique, en coupe selon son axe longitudinal, d'une turbomachine équipée d'un système de dégivrage de l'entrée d'air de la nacelle ;
- la figure 2 est une vue schématique du système de dégivrage de l'entrée d'air représenté à la figure 1, selon un mode de réalisation de l'invention ;
- la figure 3 est une vue schématique du système de dégivrage de l'entrée d'air représenté à la figure 1, selon un autre mode de réalisation de l'invention.

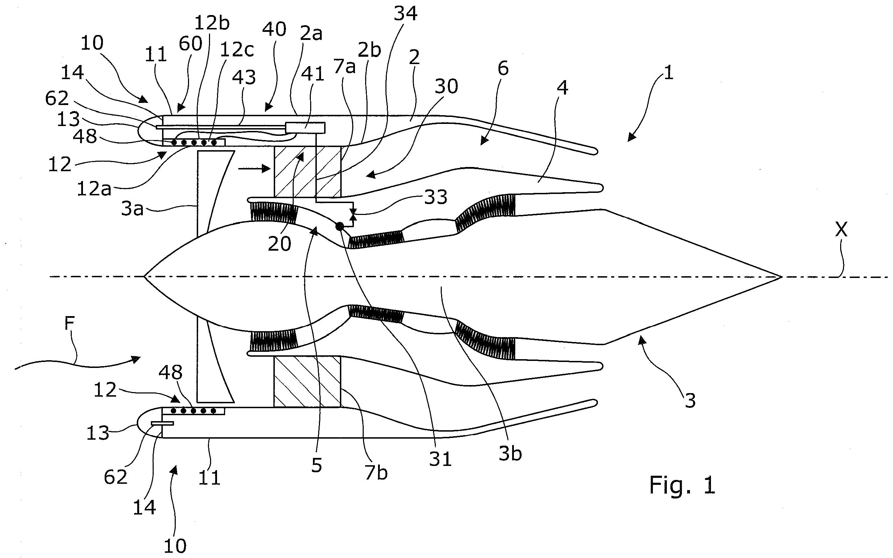

En référence avec la figure 1, une turbomachine 1 à double flux comprend une nacelle annulaire 2, centrée sur un axe longitudinal X (dit axe moteur) et entourant un moteur 3.

Dans le sens d'écoulement d'un flux d'air (flèche F) traversant la turbomachine 1 lors du fonctionnement de cette dernière, le moteur 3 comprend d'amont en aval, selon le sens d'écoulement du flux d'air F, et centrés sur l'axe moteur X, une soufflante 3a et un corps du moteur 3b. Le corps du moteur 3b comprend des éléments (notamment compresseurs, turbines) permettant de faire tourner la soufflante 3a lorsque le moteur 3 est mis en marche.

La turbomachine comprend une interveine annulaire 4 concentrique au corps du moteur 3 et qui délimite avec ce dernier une veine annulaire de flux d'air chaud 5 qui s'étend le long de l'axe moteur X. L'interveine 4 délimite avec la nacelle 2, en aval de la soufflante 6a, un conduit de soufflante 6 qui s'étend le long de l'axe moteur X et qui reçoit la majorité du flux d'air F éjecté par la soufflante 3a lors de la rotation de cette dernière.

Le moteur 3 est fixé à la nacelle 2 au moyen de deux bifurcations 7a, 7b diamétralement opposées et qui permettent d'assurer une cohésion mécanique de la turbomachine 1 et relient notamment entre elles la nacelle 2 et l'interveine 4.

La nacelle 2 comprend à son extrémité amont, une entrée d'air 10 de forme annulaire comprenant une peau externe 11 formant une portion amont d'une paroi extérieure 2a de la nacelle 2, une peau interne 12 formant une portion amont d'une paroi intérieure 2b de la nacelle pour guider l'écoulement d'air entrant dans la nacelle 2 en direction de la soufflante 3a située en aval, une lèvre d'entrée d'air 13 formant un bord d'attaque de la nacelle 2 et qui relie entre elles les peaux externe 11 et interne 12, et un cadre annulaire 14 situé dans l'épaisseur de la nacelle 2 (dans l'épaisseur signifie entre les paroi extérieures et intérieures de la nacelle) et qui relie entre elles les peaux externe 11 et interne 12. Le cadre annulaire 14 comme la peau externe 11 et la lèvre d'entrée d'air 13 sont réalisées en matériaux métalliques comme, par exemple, l'aluminium.

La peau interne 12 est, par exemple, réalisée en matériaux composites et forme une structure d'atténuation acoustique pour réaliser une atténuation acoustique des sons émis lors du fonctionnement du moteur. La structure d'atténuation acoustique comprend un premier panneau 12a ajouré qui est en contact avec l'air entrant dans la nacelle 2, un second panneau 12b distant du premier panneau 12a, et un noyau 12c interposé entre les deux panneaux 12a-b. Le noyau 12c est constitué d'une pluralité de cloisons (non représentées) s'étendant entre les deux panneaux 12a-b et formant un réseau de cavités acoustiques où chaque cavité acoustique communique avec l'air extérieur à la nacelle via les perforations (non représentées) pratiquées sur le premier panneau 12a pour former des résonateurs quart d'ondes.

La turbomachine 1 comprend un système de dégivrage de l'entrée d'air 20 qui au moyen d'un piquage d'air chaud sur le corps du moteur 3b, a pour fonction de chauffer la lèvre d'entrée d'air 13 et la peau interne 12 (en particulier le premier panneau 12a) afin de les garder exemptes de toute accumulation de glace qui pourrait se détacher par blocs et endommager la soufflante 3a.

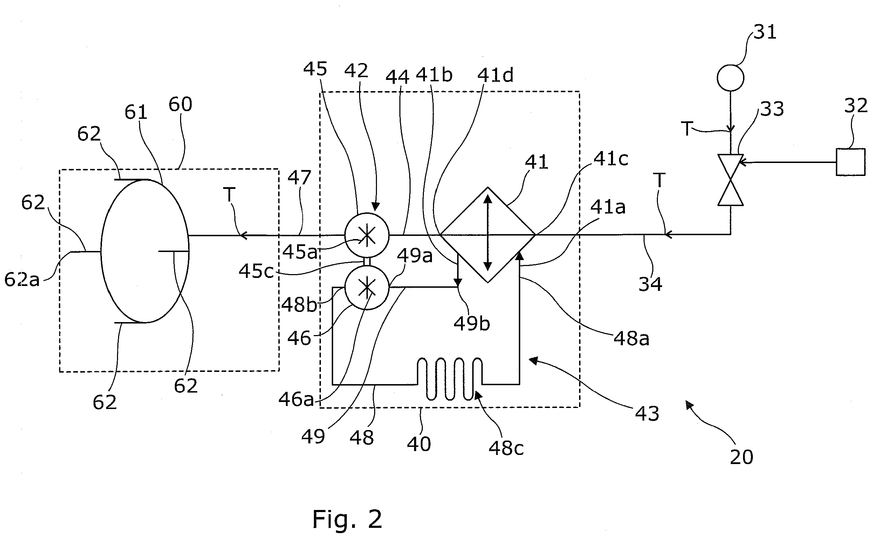

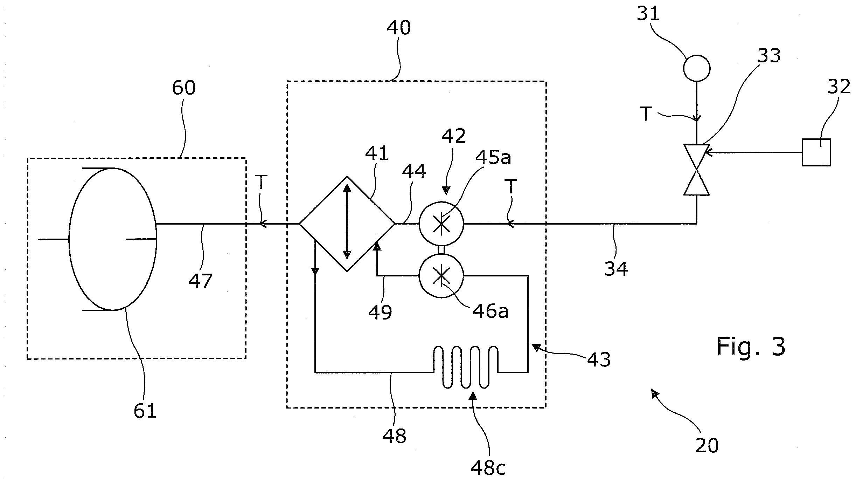

En référence avec la figure 2, et de manière connue, le système de dégivrage de l'entrée d'air 20 comprend un port de prise d'air 31 pour prélever un flux d'air chaud (flèche T sur les figures 2 et 3 indiquant le déplacement du flux d'air chaud prélevé) sur le corps du moteur 3b. Le port de prise d'air 31 (température su flux d'air chaud T prélevé entre 200°C et 300°C, pression entre 10 et 30 bar) est localisé au niveau d'un étage chaud du corps du moteur 3b, comme par exemple, l'étage haute pression du compresseur du moteur (non représenté).

Selon un mode de réalisation de l'invention, le système de dégivrage 20 comprend en outre deux systèmes de chauffage connectés l'un à l'autre, avec un système de chauffage de la peau interne 40 recevant un flux d'air chaud du port de prise d'air 31 pour réchauffer un liquide circulant dans le noyau 12c de la peau interne 12 de l'entrée d'air et un système de chauffage de la lèvre d'air 60 pour diffuser le flux d'air chaud T, refroidi par son passage dans le système de chauffage de la peau interne 40, au travers du cadre annulaire 14 pour réchauffer la lèvre d'entrée d'air 13.

Le port de prise d'air 31 est connecté au système de chauffage de la peau interne 40 par un conduit de transport 34 pour amener le flux d'air chaud T prélevé vers ledit système.

Le système de chauffage de la peau interne 40 comprend un échangeur gaz-liquide 41 connecté au port de prise d'air 31 pour recevoir le flux d'air chaud T prélevé, un circuit de pompage passif 42 alimenté par le flux d'air chaud T, un circuit hydraulique 43 pour un liquide caloporteur permettant le transport d'un liquide caloporteur, au moyen du système de pompage 42, entre l'échangeur 41 et la peau interne 12a de l'entrée d'air.

L'échangeur gaz-liquide 41 permet un échange de calories entre le flux d'air chaud et le liquide caloporteur par conduction thermique. L'échangeur gaz-liquide 41 se présente sous la forme d'un parallélépipède avec une entrée hydraulique 41a et une sortie hydraulique 41b. L'échangeur gaz-liquide 41, par exemple de type «tubes à ailettes », comprend une pluralité de plaques (non représentées) parallèles entre elles, espacées les unes des autres, et une pluralité de tubes (non représentés) traversant les plaques perpendiculairement à ces dernières. Les tubes sont reliés entre eux par des coudes pour former un canal hydraulique (non représenté) connecté à l'entrée hydraulique 41a d'un côté et à la sortie hydraulique 41b de l'autre côté pour le transit du liquide caloporteur au travers de l'échangeur 41. L'échangeur 41 comprend une entrée d'air 41c connectée au conduit de transport 34 pour recevoir le flux d'air chaud Tn et une sortie d'air 41d connectée au dispositif de pompage passif 42 via un conduit de transfert 44 pour l'évacuation de l'air chaud hors de l'échangeur 41. Les plaques s'étendent entre l'entrée d'air 41c et la sortie d'air 41d de sorte que le flux d'air chaud se déplace en étant canalisé entre les plaques, de l'entrée d'air 41c à la sortie d'air 41d, tout en chauffant les tubes.

Le dispositif de pompage passif 42 est, par exemple, de type ensemble turbine-pompe avec une turbine 45 et une pompe rotative 46 étant chacune munie d'une chambre (non représentée). La chambre de la turbine 45 est connectée d'une part au conduit de transfert 44 pour recevoir un flux d'air chaud T en provenance de l'échangeur 41 et d'autre part, via un conduit de sortie 47, au système de chauffage de la lèvre d'air 60 pour expulser l'air chaud vers ce dernier.

Chaque chambre, respectivement de la turbine 45 ou de la pompe 46, comprend une roue à aubes mobile en rotation selon un axe perpendiculaire au sens de circulation du flux d'air chaud, ou du liquide caloporteur. Les roues à aubes de la turbine 45a et de la pompe 46b sont mécaniquement liées entre elles par un embrayage 45c, par exemple de type magnétique, de sorte que la rotation de la roue à aube de la turbine 45a sous l'effet d'une circulation du flux d'air chaud au travers de la chambre de la turbine 45 entraîne une rotation de la roue à aube de la pompe 46b et une circulation du fluide caloporteur au travers de la chambre de la pompe 46.

Le circuit hydraulique 43 comprend deux tuyaux 48,49 pour le transport de liquide caloporteur avec un premier tuyau 48 arrangé en partie dans le noyau 12c et ayant une extrémité 48a connectée à l'entrée hydraulique 41a de l'échangeur et une autre extrémité 48b à la chambre de la pompe 46. Le second tuyau 49 a une extrémité 49a connectée à la chambre de la pompe 46 et une autre extrémité 49b à la sortie hydraulique 41b de l'échangeur 41.

Le circuit hydraulique 43 est défini comme étant le chemin emprunté par le liquide caloporteur de la sortie hydraulique 41b de l'échangeur vers la chambre de la pompe 46 au travers du second tuyau 49, de la chambre de la pompe 46 vers l'entrée hydraulique de l'échangeur 41a au travers du premier tuyau 48, de l'entrée hydraulique 41a de l'échangeur vers sa sortie hydraulique 41b au travers du canal hydraulique.

Le portion 48c du premier tuyau 48 arrangée dans le noyau 12c s'étend sur tout ou une partie de la circonférence de l'entrée d'air 10 et, de préférence, s'étend dans le noyau 12c selon un motif en serpentin pour maximiser les surfaces en contact.

Le système de chauffage de la lèvre d'air 60 reçoit l'air chaud en provenance du système de chauffage de la peau interne 40 via le conduit de sortie 47. Le système de chauffage de la lèvre d'air 60 comprend un conduit circulaire 61, connecté au conduit de sortie 47, qui parcoure le pourtour du cadre annulaire 14 de l'entrée d'air 10. Le conduit circulaire 61 comprend au moins une extension 62, de préférence une pluralité reparties équitablement le long de sa circonférence, où chaque extension 62 traverse le cadre annulaire 14 pour pénétrer et s'étendre dans l'espace délimité par la lèvre d'entrée d'air 13, les peaux internes et externes 11,12 et le cadre 14. L'extrémité 62a de chaque extension 62 est une buse de diffusion d'air, située à proximité de la lèvre de l'entrée d'air 13, afin de souffler un portion du flux d'air chaud sur cette dernière.

Dans le fonctionnement du circuit de dégivrage 20, lorsqu'un flux d'air chaud T arrive, par le conduit de transport 34, au système de chauffage de la peau interne 40, ce flux d'air chaud provoque la rotation de la roue à aubes de la turbine 45a qui entraine la rotation de la roue à aubes de la pompe 46a pour générer une circulation du liquide caloporteur. Le liquide caloporteur est chauffé dans l'échangeur gaz-liquide 41 et se refroidit au niveau de la peau interne 12 de l'entrée d'air. Le mouvement du liquide caloporteur permet d'amener des calories vers la peau interne 12 de l'entrée d'air pour la faire chauffer et empêcher toute accrétion de glace sur ladite peau. En considérant un flux d'air chaud de température comprise entre 200°C et 300°C prélevé sur le corps du moteur 3b , la température du liquide caloporteur circulant dans le premier tuyau 48 est comprise entre 50°C et 100°C, en deca de la température maximale admissible à laquelle peuvent être soumis les matériaux composites.

En sortie de l'échangeur 41, le flux d'air chaud T chaud est refroidi puisque une partie de ses calories a été transmise au liquide caloporteur. En considérant l'exemple précédant, la température du flux d'air chaud T en sortie du système de chauffage de la peau interne 40 est abaissée d'environ 50°C, à une température de l'ordre de 150°C à 250°C. La température de l'air diffusé via le conduit circulaire 61 dans l'espace délimité par la lèvre 13, le cadre 14, la peau interne 12, la peau externe 11, est en deçà de la température critique à laquelle peut être soumis l'aluminium.

Le système de dégivrage 20 selon l'invention est compatible avec une entrée d'air 10 ayant des portions réalisées en partie en matériaux composites et en aluminium, et est compatible avec d'autres matériaux, comme le titane. Son fonctionnement par prélèvement d'un flux d'air chaud T sur le corps du moteur 3b et, par circulation d'un liquide caloporteur au moyen d'un dispositif de pompage passif 42, est simple et peu coûteux en terme de masse ajoutée.

Dans une variante de réalisation de l'invention, et en référence avec la figure 3, le système de dégivrage 20 est identique et les éléments constitutifs portent les mêmes références caractéristiques, seul le dispositif de pompage passif 42 est situé en amont, en considérant le sens de déplacement du flux d'air chaud prélevé T, de l'échangeur 41. Cette configuration ne modifie pas les avantages et le fonctionnement général de l'invention tels que décrits plus haut.

De préférence, et tel qu'illustré aux figures 2 et 3, le système de dégivrage 20 comprend une unité centrale 32 et une vanne de contrôle 33 arrangée sur le conduit de transport 34.La vanne de contrôle 33 est déplaçable entre une positon d'ouverture dans laquelle elle autorise la circulation d'un flux d'air chaud vers le système de chauffage de la peau interne 40 et une position de fermeture dans laquelle elle bloque le flux d'air chaud. Dans la position de fermeture de la vanne de contrôle 33, le prélèvement d'air chaud sur le corps du moteur 3b est stoppé.

La vanne de contrôle 33 est pilotée électriquement par l'unité centrale 32 pour déplacer ladite vanne entre ses positons d'ouverture ou de fermeture. L'unité centrale 32 reçoit des consignes de dégivrage du poste de pilotage (action manuelle) ou par des systèmes avioniques de l'avion (dégivrage automatique).

On notera que dans l'exemple illustré à la figure 1, la vanne de contrôle 33 est arrangée dans l'interveine, et le conduit s'étend en partie dans l'interveine pour rejoindre, via la bifurcation 7a, le système de chauffage de la peau interne 40 situé dans le noyau 12c de l'entrée d'air, entre la peau interne 12 et la peau externe 11, et en aval du cadre annulaire 14.

## Revendications

1. Turbomachine à double flux (1) comprenant un corps de moteur (3b) et une nacelle annulaire (2) entourant le corps de moteur (3b); la nacelle (2) ayant une entrée d'air (10) comprenant une peau externe (11), une peau interne (12), une lèvre d'entrée d'air (13) formant un bord d'attaque de la nacelle (2) et reliant entre elles les peaux externe et interne (11,12), et un cadre annulaire (14) reliant entre elles les peaux externe et interne; la peau interne (12) comprenant un premier panneau (12a) en contact avec l'air entrant dans la nacelle (2), un second panneau (12b) distant du premier panneau (12a), et un noyau (12c) interposé entre les deux panneaux (12a-b); la turbomachine (1) comprenant un système de dégivrage (20) de l'entrée d'air ayant un port de prise d'air (31) pour prélever un flux d'air chaud (T) sur le corps du moteur (3b), **caractérisée en ce que** le système de dégivrage (20) comprend un système de chauffage de la peau interne (40) connecté au port de prise d'air (31) pour recevoir le flux d'air chaud (T), un échangeur gaz-liquide (41) traversé par le flux d'air chaud (T), un circuit hydraulique (43) contenant un liquide caloporteur et arrangé en partie dans l'échangeur (41) et dans le noyau (12c), et un dispositif de pompage passif (42) du liquide caloporteur configuré pour fonctionner avec une circulation du flux d'air chaud (T), le système de dégivrage (20) comprenant en outre un système de chauffage (60) ayant un conduit circulaire (61) connecté au système de chauffage de la peau interne (40) pour recevoir le flux d'air chaud (T) après son passage dans ledit système (40), le conduit circulaire comprenant au moins une extension (62) traversant le cadre annulaire (14) et s'étendant dans l'espace délimité par la lèvre d'entrée d'air (13), la peau interne (12), la peau externe (11) et le cadre annulaire (14).

2. Turbomachine (1) selon la revendication 1, **caractérisée en ce que** le dispositif de pompage passif (42) est un ensemble turbine-pompe avec une turbine (45) et une pompe (46), chacune de la turbine et de la pompe étant munie d'une chambre dans laquelle est arrangée une roue à aube (45a,46a), la chambre de la turbine (45) recevant le flux d'air chaud (T) et la chambre de la pompe (46) recevant le liquide caloporteur, la roue à aube de la turbine (45a) étant mécaniquement liée à la roue à aube de la pompe (46a) de sorte que la rotation de la roue à aube de la turbine (45a) sous l'effet d'une circulation du flux d'air chaud au travers de la chambre de la turbine (45) entraîne une rotation de la roue à aube de la pompe (46a) et une circulation du liquide caloporteur au travers de la chambre de la pompe (46).

3. Turbomachine (1) selon la revendication 2, **caractérisée en ce que** l'échangeur (41) ayant une entrée et une sortie hydrauliques (41a, 4 lb), le circuit hydraulique (43) comprend deux tuyaux (48,49) pour le transport du liquide caloporteur avec un premier tuyau (48) ayant une portion (48c) arrangée dans le noyau (12c) et ayant une première extrémité (48a) connectée à l'entrée hydraulique (41a) de l'échangeur et une seconde extrémité (48b) connectée à la chambre de la pompe (46), le second tuyau (49) ayant une première extrémité (49a) connectée à la chambre de la pompe (46) et une seconde extrémité (49b) connectée à la sortie hydraulique (41b) de l'échangeur.

4. Turbomachine (1) selon la revendication 3, **caractérisée en ce que** la portion (48c) du premier tuyau (48) arrangée dans le noyau (12c) s'étend sur tout ou une partie d'une circonférence de l'entrée d'air (10).

5. Turbomachine (1) selon l'une quelconque des revendications 3 à 4, **caractérisée en ce que** la portion (48c) du premier tuyau (48) arrangée dans le noyau (12c) s'étend selon un motif en serpentin dans le noyau (12c).

6. Turbomachine (1) selon l'une quelconque des revendications 1 à 5, **caractérisée en ce que** le système de dégivrage (20) comprend une unité centrale (32) et une vanne de contrôle (33), ladite vanne étant déplaçable entre une positon d'ouverture dans laquelle un flux d'air chaud prélevé sur le corps du moteur (3a) circule vers le système de chauffage de la peau interne (40) et une position de fermeture dans laquelle aucun flux d'air chaud ne transite au-delà de la vanne de contrôle (33), la vanne de contrôle est pilotée électriquement par l'unité centrale (32) pour déplacer ladite vanne entre ses positons d'ouverture ou de fermeture.

7. Turbomachine (1) selon l'une quelconque des revendications 1 à 6, **caractérisée en ce que** le conduit circulaire (61) parcourant le pourtour du cadre annulaire (14) et est muni d'une pluralité d'extensions (62) reparties équitablement le long de sa circonférence et où chaque extension traverse le cadre annulaire (14).

## Patentansprüche

1. Doppelstrom-Turbotriebwerk (1), umfassend einen Triebwerkskörper (3b) und eine ringförmige Gondel (2), die den Triebwerkskörper (3b) umgibt; wobei die Gondel (2) einen Lufteinlass (10) aufweist, der eine Außenhaut (11), eine Innenhaut (12), eine Lufteinlasslippe (13), die eine Vorderkante der Gondel (2) ausbildet und die Außen- und die Innenhaut (11, 12) miteinander verbindet, und einen ringförmigen Rahmen (14), der die Außen- und die Innenhaut miteinander verbindet, umfasst; wobei die Innenhaut (12) eine erste Platte (12a), die mit der in die Gondel (2) eintretenden Luft in Kontakt steht, eine von der ersten Platte (12a) entfernte zweite Platte (12b) und einen zwischen den beiden Platten (12a - b) angeordneten Kern (12c) umfasst; wobei das Turbotriebwerk (1) ein System (20) zur Enteisung des Lufteinlasses umfasst, das eine Lufteinlassöffnung (31) zur Entnahme eines heißen Luftstroms (T) aus dem Triebwerkskörper (3b) aufweist,
**dadurch gekennzeichnet, dass** das Enteisungssystem (20) ein System zum Heizen der Innenhaut (40), das mit der Lufteinlassöffnung (31) zur Aufnahme des heißen Luftstroms (T) verbunden ist, einen Gas-Flüssigkeit-Tauscher (41), durch den der heiße Luftstrom (T) strömt, einen Hydraulikkreislauf (43), der eine Wärmeträgerflüssigkeit enthält und teilweise im Tauscher (41) und im Kern (12c) angeordnet ist, und eine Vorrichtung (42) zum passiven Pumpen der Wärmeträgerflüssigkeit, die dazu konfiguriert ist, mit einer Zirkulation des heißen Luftstroms (T) zu arbeiten, umfasst, wobei das Enteisungssystem (20) ferner ein Heizsystem (60) umfasst, das eine kreisförmige Leitung (61)aufweist, die mit dem Innenhaut-Heizsystem (40) verbunden ist, um den heißen Luftstrom (T) aufzunehmen, nachdem er durch das System (40) geströmt ist, wobei die kreisförmige Leitung (61) zumindest eine Erweiterung (62) aufweist, die durch den ringförmigen Rahmen (14) verläuft und sich in dem durch die Lufteinlasslippe (13), die Innenhaut (12), die Außenhaut (11) und den ringförmigen Rahmen (14) begrenzten Raum erstreckt.

2. Turbotriebwerk (1) nach Anspruch 1, **dadurch gekennzeichnet, dass** die passive Pumpvorrichtung (42) eine Turbinen-Pumpen-Baugruppe mit einer Turbine (45) und einer Pumpe (46) ist, wobei sowohl die Turbine als auch die Pumpe mit einer Kammer versehen sind, in der ein Laufrad (45a, 46a) angeordnet ist, wobei die Kammer der Turbine (45) den heißen Luftstrom (T) aufnimmt und die Kammer der Pumpe (46) die Wärmeträgerflüssigkeit aufnimmt, wobei das Turbinenlaufrad (45a) mechanisch mit dem Pumpenlaufrad (46a) verbunden ist, so dass die Drehung des Turbinenlaufrads (45a) unter der Einwirkung einer Zirkulation des heißen Luftstroms durch die Turbinenkammer (45) eine Drehung des Pumpenlaufrads (46a) und eine Zirkulation der Wärmeträgerflüssigkeit durch die Pumpenkammer (46) bewirkt.

3. Turbotriebwerk (1) nach Anspruch 2, **dadurch gekennzeichnet, dass** der Tauscher (41) einen hydraulischen Einlass und einen hydraulischen Auslass (41a, 41b) aufweist, wobei der Hydraulikkreislauf (43) zwei Rohre (48, 49) zum Transport der Wärmeträgerflüssigkeit aufweist, wobei ein erstes Rohr (48) einen Abschnitt (48c) aufweist, der im Kern (12c) angeordnet ist und ein mit dem hydraulischen Einlass (41a) des Tauschers verbundenes erstes Ende (48a) und ein mit der Kammer der Pumpe (46) verbundenes zweites Ende (48b) aufweist, wobei das zweite Rohr (49) ein mit der Kammer der Pumpe (46) verbundenes erstes Ende (49a) und ein mit dem hydraulischen Auslass (41b) des Tauschers verbundenes zweites Ende (49b) aufweist.

4. Turbotriebwerk (1) nach Anspruch 3, **dadurch gekennzeichnet, dass** sich der im Kern (12c) angeordnete Abschnitt (48c) des ersten Rohrs (48) über den gesamten Umfang des Lufteinlasses (10) oder einen Teil davon erstreckt.

5. Turbotriebwerk (1) nach einem der Ansprüche 3 bis 4, **dadurch gekennzeichnet, dass** sich der im Kern (12c) angeordnete Abschnitt (48c) des ersten Rohrs (48) schlangenförmig im Kern (12c) erstreckt.

6. Turbotriebwerk (1) nach einem der Ansprüche 1 bis 5, **dadurch gekennzeichnet, dass** das Enteisungssystem (20) eine zentrale Einheit (32) und ein Steuerventil (33) umfasst, wobei das Ventil zwischen einer geöffneten Stellung, in der ein aus dem Triebwerkskörper (3a) entnommener heißer Luftstrom zum Heizsystem der Innenhaut (40) strömt, und einer geschlossenen Stellung, in der kein heißer Luftstrom über das Steuerventil (33) hinausgeht, bewegbar ist, wobei das Steuerventil durch die zentrale Einheit (32) elektrisch gesteuert wird, um das Ventil zwischen seiner offenen und seiner geschlossenen Stellung zu bewegen.

7. Turbotriebwerk (1) nach einem der Ansprüche 1 bis 6, **dadurch gekennzeichnet, dass** die kreisförmige Leitung (61) um den Umfang des ringförmigen Rahmens (14) verläuft und mit mehreren Erweiterungen (62) versehen ist, die gleichmäßig über ihren Umfang verteilt sind, und wobei jede Erweiterung durch den ringförmigen Rahmen (14) verläuft.

## Claims

1. Bypass turbine engine (1) comprising an engine spool (3b) and an annular nacelle (2) surrounding the engine spool (3b); the nacelle (2) having an air intake (10) comprising an external skin (11), an internal skin (12), an air intake lip (13) forming a leading edge of the nacelle (2) and connecting the external and internal skins (11, 12) to one another, and an annular frame (14) connecting the external and internal skins together; the internal skin (12) comprising a first panel (12a) in contact with the air entering the nacelle (2), a second panel (12b) distant from the first panel (12a), and a core (12c) interposed between the two panels (12a-b); the turbine engine (1) comprising an air intake deicing system (20) having an air bleed port (31) for bleeding a hot air stream (T) from the spool of the engine (3b), **characterized in that** the deicing system (20) comprises a system for heating the internal skin (40) which system is connected to the air bleed port (31) to receive the hot air stream (T), a gas-liquid exchanger (41) through which the hot air stream (T) passes, a hydraulic circuit (43) containing a heat-transfer liquid and arranged in part in the exchanger (41) and in the core (12c), and a passive pumping device (42) for pumping the heat-transfer liquid and configured to operate with a circulation of the hot air stream (T), the deicing system (20) further comprising a heating system (60) having a circular pipeline (61) connected to the system for heating the internal skin (40) to receive the hot air stream (T) after it has passed through said system (40), the circular pipeline comprising at least one extension (62) passing through the annular frame (14) and extending into the space delimited by the air intake lip (13), the internal skin (12), the external skin (11) and the annular frame (14).

2. Turbine engine (1) according to Claim 1, **characterized in that** the passive pumping device (42) is a turbine-pump assembly with a turbine (45) and a pump (46), each of the turbine and the pump being equipped with a chamber in which a bladed wheel (45a, 46a) is arranged, the chamber of the turbine (45) receiving the hot air stream (T) and the chamber of the pump (46) receiving the heat-transfer liquid, the bladed wheel of the turbine (45a) being mechanically connected to the bladed wheel of the pump (46a) so that rotation of the bladed wheel of the turbine (45a) under the effect of a circulation of the hot air stream through the chamber of the turbine (45) causes the bladed wheel of the pump (46a) to rotate and heat-transfer liquid to be circulated through the chamber of the pump (46) .

3. Turbine engine (1) according to Claim 2, **characterized in that**, with the heat exchanger (41) having a hydraulic inlet and a hydraulic outlet (41a, 41b), the hydraulic circuit (43) comprises two pipes (48, 49) for transporting the heat-transfer liquid, with a first pipe (48) having a portion (48c) arranged in the core (12c) and having a first end (48a) connected to the hydraulic inlet (41a) of the exchanger and a second end (48b) connected to the chamber of the pump (46), the second pipe (49) having a first end (49a) connected to the chamber of the pump (46) and a second end (49b) connected to the hydraulic outlet (41b) of the exchanger.

4. Turbine engine (1) according to Claim 3, **characterized in that** the portion (48c) of the first pipe (48) that is arranged in the core (12c) extends over all or part of a circumference of the air intake (10) .

5. Turbine engine (1) according to either one of Claims 3 to 4, **characterized in that** the portion (48c) of the first pipe (48) that is arranged in the core (12c) extends in a serpentine pattern within the core (12c).

6. Turbine engine (1) according to any one of Claims 1 to 5, **characterized in that** the deicing system (20) comprises a central unit (32) and a control valve (33), said valve being movable between an open position in which a hot air stream bled from the spool of the engine (3a) circulates towards the internal-skin heating system (40), and a closed position in which no hot air flow passes beyond the control valve (33), the control valve being operated electrically by the central unit (32) to move said valve between its open and closed positions.

7. Turbine engine (1) according to any one of Claims 1 to 6, **characterized in that** the circular pipeline (61) runs around the periphery of the annular frame (14) and is equipped with a plurality of extensions (62) equally distributed along its circumference, and in which each extension passes through the annular frame (14).
